# EUROPEAN PATENT SPECIFICATION

(11) **EP 0 899 311 B1**
(45) Date of publication and mention of the grant of the patent: **20.11.2002**
(21) Application number: 98401331.8
(22) Date of filing: 04.06.1998
(51) Int. Cl.: C09D 11/00

(54) **Ink composition for ink jet recording, process for the preparation thereof, and ink jet recording process using said ink composition**
Tintenzusammensetzung zum Tintenstrahldrucken, Verfahren für ihre Herstellung und Tintenstrahldruck- Verfahren bei dem diese Tintenzusammensetzung benutzt wird
Composition d'encre pour impression par jet d'encre, sa méthode de préparation et méthode d'impression par jet d'encre utilisant ladite composition d'encre

(30) Priority: 25.08.1997 JP 22834497
(43) Date of publication of application: 03.03.1999
(73) Proprietor: SEIKO EPSON CORPORATION, Shinjuku-ku Tokyo (JP)
(72) Inventor: Yamazaki, Hideo, Suwa-shi, Nagano-ken (JP); Tsukahara, Michinari, Suwa-shi, Nagano-ken (JP); Nakamura, Hiroto, Suwa-shi, Nagano-ken (JP); Komatsu, Hidehiko, Suwa-shi, Nagano-ken (JP)
(74) Representative: Hubert, Philippe

(56) References cited:
- EP-A- 0 441 987
- EP-A- 0 475 075
- EP-A- 0 618 279
- EP-A- 0 784 085

## Description

### FIELD OF THE INVENTION

The present invention relates to an ink composition for ink jet recording, a process for the preparation of such an ink composition, and an ink jet recording process using such an ink composition.

### BACKGROUND OF THE INVENTION

A composite black comprising a cyan ink, a yellow ink and a magenta ink can be used as a black ink in the ink jet recording process. In general, however, the composite black provides a low density. Further, the image printed from the composite black has a deteriorated light resistance. Thus, as the coloring agent there has heretofore been mainly used a carbon black. However, since the single use of carbon black as a coloring agent may impair the stability of ink jetting from the recording head, attempts have heretofore been made to overcome these difficulties.

For example, JP-A-4-57861 (The term "JP-A" as used herein means an "unexamined published Japanese patent application") discloses an aqueous black ink comprising carbon black and a dye. This ink allegedly exhibits excellent print fastness (e.g., water resistance, marker resistance, abrasion resistance) as well as excellent jetting stability.

Further, JP-A-6-287492 discloses an aqueous black comprising an inorganic pigment (particularly carbon black), a dispersant and particulate titanium dioxide or alumina. This ink allegedly enables a recording process with an excellent reliability that provides an excellent print density and quality.

EP 0 441 987 discloses a recording liquid comprising certain specified dyes, carbon black, a water-soluble resin, a water-soluble organic solvent and water.

An ink containing a pigment and a dispersing agent in an aqueous medium, and further containing at least one fine particulate white inorganic material selected from fine particulate titanium dioxide, and fine particulate alumina is disclosed in EP 0 618 279.

However, the prior art ink jet recording process using the foregoing ink exhibits an excellent jetting stability over a short period of time but has disadvantages in that an ink droplet can fly irregularly in randomly deflected directions (this phenomenon is hereinafter referred to as "malalignment"), making it impossible to achieve recording on a recording paper as expected. Such a malalignment can be a critical defect in recent recording processes requiring a high image quality and recording processes in great demand in the future which require the printer to operate over an extended period of time, e.g., plural copies.

Further, the above-described black ink comprising a dye is disadvantageous in that the resulting printed matter leaves something to be desired in light resistance.

### SUMMARY OF THE INVENTION

Therefore, an object of the present invention is to eliminate the foregoing malalignment which can occur when the ink jet recording process is used over an extended period of time while maintaining the desired print quality required for an ink composition for the ink jet recording process.

The foregoing object can be accomplished with the ink composition for ink jet recording process of the present invention, comprising
(1) a carbon black,
(2) an organic pigment and
(3) a dispersant
incorporated in an aqueous medium.

### DETAILED DESCRIPTION OF THE INVENTION

Suitable examples of the carbon black incorporated in the ink composition include those which have heretofore been commonly used in conventional ink compositions for ink jet recording process. Specific examples of suitable carbon blacks include furnace black, lamp black, acetylene black, and channel black.

The organic pigment employable herein is not specifically limited as long as it can be dispersed in an aqueous medium. Preferred examples of suitable organic pigments include C.I. pigment yellow, C.I. pigment red, and C.I. pigment blue. The ink composition according to the present invention may comprise C.I, pigment yellow, C.I. pigment red and C.I. pigment blue. Specific examples of C.I. pigment yellows, C.I. pigment reds, and C.I. pigment blues are given below:
C.I. pigment yellow 1 (Fast Yellow G), 3, 12 (disazo yellow AAA), 13, 14, 17, 24, 34, 35, 37, 42 (yellow iron oxide), 53, 55, 81, 83 (disazo yellow HR), 95, 97, 98, 100, 101, 104, 108, 109, 110, 117, 120, 138, 153;
C.I. pigment red 1, 2, 3, 5, 7, 17, 22 (Brilliant Fast Scarlet), 23, 31, 38, 48 : 2 [Permanent Red 2B (Ba)], 48 : 2 [Permanent Red 2B (Ca)], 48 : 3 [Permanent Red 2B (Sr)], 48 : 4 [Permanent Red 2B (Mn)], 49 : 1, 52 : 2, 53 : 1, 57 : 1 (Brilliant Carmine 6B), 60 : 1, 63 : 1, 63 : 2, 64 : 1, 81 (Rhodamine 6G Lake), 83, 88, 101 (red iron oxide), 104, 105, 106, 108 (cadmium red), 112, 114, 122 (Quinacridone Magenta), 123, 146, 149, 166, 168, 170, 172, 177, 178, 179, 185, 190, 193, 209, 219; and
C.I. pigment blue 1, 2, 15 (Phthalocyanine Blue R), 15 : 1, 15 : 2, 15 : 3 (Phthalocyanine Blue G), 15 : 4, 15 : 6 (Phthalocyanine Blue E), 16, 17 : 1, 56, 60, 63.

In addition to the foregoing organic pigments, black organic pigments such as aniline black (C.I. pigment black 1) may be used.

Additionally, organic pigments such as C.I. pigment orange 1, 2, 5, 7, 13, 14, 15, 16, 34, 36, 38; C.I. pigment violet 1, 2, 19, 32; C.I. pigment green 1, 4, 36; C.I. pigment brown 3, 5, 25, 26 may be used.

The ink composition according to the present invention is suitable as long as it comprises as pigments a carbon black and at least one organic pigment incorporated therein. In order to adjust the color tone, the carbon black and two or three or more organic pigments may be combined. In the case of the combination of a carbon black and one organic pigment, the organic pigment is preferably selected from the group consisting of organic pigments having a color tone close to black, more preferably C.I. pigment black 1 (aniline black), C.I. pigment brown 26 (perylene black), C.I. pigment violet, C.I. pigment green, and C.I. pigment blue. In order to properly mix color tones, organic pigments respectively selected from the group consisting of carbon black and C.I. pigments Y, M and C may be added to the carbon black.

The total amount of pigment, i.e., the sum of the amount of the carbon black and the organic pigment is determined to achieve the color and density required for printed material or desired physical properties of ink and the amount varies with the specific gravity or bulk density of the pigment. Thus, the amount is not specifically limited. In practice, however, it is preferably from 0.5 to 30% by weight, more preferably from 1 to 12% by weight, based on the total weight of the ink composition. If the total amount of the pigment falls below 0.5% by weight, the desired print density may not be obtained. On the contrary, if the total amount of the pigment exceeds 30% by weight, the ink composition exhibits a structural viscosity that makes it impossible to secure the desired jetting stability. If the total amount of the pigment falls within the range of from 1 to 12% by weight, a high print density can be obtained and the resulting ink composition is quite suitable for the ink jet recording process.

The ratio of the amount of carbon black to the amount of organic pigment (carbon black : organic pigment) (w/w) varies with the various properties of the carbon black used and the organic pigment selected and thus is not specifically limited. In practice, however, it is preferably from 90 : 10 to 30 : 70, more preferably from 90 : 10 to 50 : 50. If the amount of carbon black exceeds 9 times by weight that of the organic pigment, long-term jetting stability can be impaired. On the contrary, if the amount of carbon black falls below 3/7 times by weight that of the organic pigment, sufficient print density cannot be achieved, or the light resistance of the printed material can be impaired. If the foregoing amount ratio (carbon black : organic pigment) falls within the range of from 90 : 10 to 50 : 50, the desired long-term jetting stability and print quality can be achieved.

The ink composition according to the present invention comprises a dispersant which allows the carbon black and the organic pigment to be dispersed in an aqueous medium. Suitable examples of dispersants to be incorporated in the ink composition of the present invention include a copolymer resin having a hydrophilic moiety and a hydrophobic moiety in its molecule. Specific examples of suitable dispersants include acrylic acid-based dispersants such as styrene-acrylic acid copolymer, styrene-acrylic acid-acrylic acid ester copolymer, styrene-methacrylic acid copolymer and styrene-methacrylic acid-acrylic acid ester copolymer, maleic acid-based dispersant such as styrene-maleic acid copolymer, acrylic acid ester-maleic acid copolymer and styrene-acrylic acid ester-maleic acid copolymer, sulfonic acid-based dispersants such as acrylic acid ester-styrenesulfonic acid copolymer, styrene-methacrylsulfonic acid copolymer and acrylic acid ester-allylsulfonic acid copolymer, and salts thereof. The dispersant to be used in the present invention is preferably a resin dispersant, more preferably a styrene-acrylic acid copolymer dispersant, particularly a copolymer dispersant having a weight-average molecular weight (hereinafter simply referred to as "molecular weight") of from 1,600 to 25,000 and an acid value of from 100 to 250.

Suitable styrene-acrylic acid copolymer dispersants are commercially available. Specific examples of commercially available styrene-acrylic acid copolymer dispersants employable in the present invention include those available from Johnson Polymer Corporation such as Joncryl 68 (molecular weight: 10,000; acid value: 195), Joncryl 679 (molecular weight: 7,000; acid value: 200), Joncryl 680 (molecular weight: 3,900; acid value: 215), Joncryl 682 (molecular weight: 1,600; acid value: 235), Joncryl 550 (molecular weight: 7,500; acid value: 200), Joncryl 555 (molecular weight: 5,000; acid value: 200), Joncryl 586 (molecular weight: 3,100; acid value: 105), Joncryl 683 (molecular weight: 7,300; acid value: 150), and B-36 (molecular weight: 6,800; acid value: 250).

The amount of the resin dispersant varies with the kind and amount of carbon black and organic pigment used and thus is not specifically limited. In practice, however, the weight ratio of the entire pigment to the resin dispersant is preferably from 20 : 1 to 5 : 2.

If the amount of the resin dispersant falls below the above defined range, the dispersion stability (agglomeration, deterioration of viscosity) of the pigment with time can be deteriorated if the ink composition is allowed to stand. On the contrary, if the amount of the resin dispersant exceeds the above defined range, redispersibility required if the ink composition is dried cannot be occasionally obtained.

Preferably a salt of the acrylic acid moiety is formed in the foregoing resin dispersant to allow the resin dispersion to be produced. Examples of alkali neutralizers include compounds which provide a counter ion for the acrylic acid moiety, e.g., aminomethyl propanol, 2-aminoisopropanol, triethanolamine, morpholine, aqueous ammonia. The amount of the alkali neutralizer may be not less than the value such that the resulting counter ion is able to neutralize the foregoing resin dispersant (neutralization equivalent). If the amount of the alkali neutralizer is about 1.3 times the neutralization equivalent, desirable fixability after printing is achieved. Further, propylene glycol and/or isopropanol may be used as a dissolution aid for resin dispersant.

In order to provide the foregoing dispersant with the desired dissolution stability, a pH buffer is preferably added to the ink composition to adjust the ink composition to an optimum pH value so that the salt in the dispersant can easily dissociate and ions be formed. Specific examples of such a pH buffer include aqueous solutions of potassium hydrogen phthalate, potassium dihydrogenphosphate, sodium dihydrogenphosphate, sodium tetraborate, potassium hydrogen tartrate, sodium hydrogencarbonate, sodium carbonate, tris(hydroxymethyl)aminomethane and tris(hydroxymethyl) aminomethane hydrochloride. The amount of such a pH buffer is preferably an amount such that the resulting ink composition has a pH value of from 7 to 10 from the standpoint of durability of head member and ink composition stability.

The ink composition of the present invention preferably includes a thermoplastic resin emulsion incorporated therein. The thermoplastic resin emulsion may be prepared by emulsion polymerization or suspension polymerization of an ethylenically unsaturated monomer in water or by the emulsification of a thermoplastic resin in water.

Suitable thermoplastic resin components to be incorporated in the foregoing thermoplastic resin emulsion include the same thermoplastic resin component as used in the thermoplastic resin emulsion previously used in conventional ink compositions for the ink jet recording process. Specific examples of thermoplastic resins employable herein include acrylic polymers such as polyacrylic acid ester, copolymer thereof, polymethacrylic acid ester, copolymer thereof, polyacrylonitrile, copolymer thereof, polycyano acrylate, polyacrylamide, polyacrylic acid and polymethacrylic acid, polyolefinic polymers such as polyethylene, polypropylene, polybutene, polyisobutylene, polystyrene, copolymer thereof, petroleum resin, cumarone-indene resin and terpene resin, vinyl acetate-vinyl alcohol polymers such as vinyl polyacetate, copolymer thereof, polyvinyl alcohol, polyvinyl acetal and polyvinyl ether, halogen-containing polymers such as polyvinyl chloride, copolymer thereof, polyvinylidene chloride, fluororesin and fluorine rubber, nitrogen-containing vinyl polymers such as polyvinyl carbazole, polyvinyl pyrrolidone, copolymer thereof, polyvinyl pyridine and polyvinyl imidazole, diene polymers such as polybutadiene, copolymer thereof, polychloroprene and polyisoprene (butyl rubber), and other ring-opening polymerization type resins, condensation polymerization type resins and natural polymer resins.

The amount of the foregoing thermoplastic resin component is preferably not more than 30% by weight, more preferably from 0.5 to 30% by weight, particularly preferably from 1 to 20% by weight, based on the total weight of the ink composition. The arrangement of the amount of the thermoplastic resin component to not less than 0.5% by weight makes it possible to provide an even higher print quality, particularly a high print density. The arrangement of the amount of the thermoplastic resin component to not more than 30% by weight makes it possible to provide the resulting ink composition with a desired fixability while inhibiting the occurrence of fill-in.

The ink composition according to the present invention may optionally comprise a water-soluble high molecular weight compound incorporated therein preferably in an amount of not more than 15% by weight, more preferably from 3 to 10% by weight based on the total weight of the ink composition to achieve a proper viscosity.

Suitable water-soluble high molecular weight compounds include saccharides or derivatives thereof such as saccharose, maltitol, maltose, sorbitol, mannitol and glucose, alone or in combination. Further, compounds having a high hydroxyl group content and a high water solubility such as a water-soluble resin (e.g., polyvinyl alcohol, sodium alginate, polyethylene oxide) and modification products thereof may be used, alone or in combination. If such a water-soluble high molecular compound is used, the jetting stability of the ink composition can be enhanced.

Further, the ink composition according to the present invention may optionally include a water-soluble polyvalent alcohol incorporated therein preferably in an amount of not more than 25% by weight, more preferably from 6 to 20% by weight, based on the total weight of the ink composition to achieve the desired jetting stability. However, if the amount of such a water-soluble polyvalent alcohol is too great, the resulting ink composition can be poor in drying. Thus, care must be taken.

Examples of the above water-soluble polyvalent alcohol include, e.g., a C₃₋₁₀ divalent or trivalent alcohol. For example, glycerin, ethylene glycol, diethylene glycol, triethylene glycol, dipropylene glycol, hexylene glycol, and 1,2,6-hexanetriol may be used, alone or in combination.

Further, the ink composition according to the present invention may optionally include a surface active agent incorporated therein preferably in an amount of not more than 2% by weight, more preferably from 0.1 to 1% by weight, based on the total weight of the ink composition to achieve the desired jetting stability. However, if the amount of such a surface active agent is too great, the resulting ink composition exhibits too great a foamability, possibly impairing the jetting stability.

Examples of suitable surface active agents employable herein include anionic surface active agents such as higher aliphatic acid salt, higher alkyldicarboxylic acid salt, higher alcoholsulfuric acid ester, higher alkylsulfonic acid salt, alkylbenzenesulfonate, alkylnaphthalenesulfonate, salt of naphthalenesulfonic acid with sodium, potassium, lithium or calcium, polycondensate of formalin, condensate of higher aliphatic acid with amino acid, dialkylsulfosuccinic acid ester, alkylsulfosuccinic acid salt, naphthenic acid salt, alkylethercarboxylate, acylated peptide, α-olefinsulfonate, N-acylmethyltaurine, alkylethersulfate, secondary higher alcohol ethoxy sulfate, monoglysulfate, alkyletherphosphoric acid ester, alkylphosphoric acid ester, ammonium salt of polyoxyethylenealkylethersulfuric acid, sodium salt of polyoxyethylenealkylethersulfuric acid, ammonium salt of polyoxyethylenealkylphenylethersulfuric acid, sodium salt of polyoxyethylenealkylphenylethersulfuric acid, monoethanolamine of polyoxyethylenealkylsulfuric acid, ammonium salt of polyoxyethylenealkyletherphosphoric acid, potassium salt of polyoxyethylenealkyletherphosphoric acid, diethanolamine of polyoxyethylenealkyletherphosphoric acid, sodium alkylnaphthalenesulfonate and sodium laurylsulfate, and nonionic surface active agents such as fluorine-based surface active agent, silicone-based surface active agent, polyoxyethylene sorbitan monolaurate, polyoxyethylene sorbitan monostearate, polyxoyethylene alkyl phenyl ether, sorbitan monostearate, acetylene glycol, ethylene oxide adduct of acetylene glycol (acetylene glycol alcohol ethylene oxide), propylethanolamide, polyoxyethylene alkyl ether, and polyxoyethylene alkyl phenyl ether.

The ink composition according to the present invention also comprises various ingredients incorporated in an aqueous medium. Accordingly, the ink composition of the present invention may comprise a monovalent alcohol incorporated therein preferably in an amount of not more than 15% by weight, more preferably from 1 to 10% by weight, based on the total weight of the ink composition in addition to water as a main solvent to enhance dryability and penetrating power of the ink composition. Examples of monovalent alcohols are C₂₋₄ alkanols. For example, ethanol, 1-propanol, 2-propanol, 1-butanol, 2-butanol, iso-butanol, and t-butanol may be used, alone or in combination of two or more.

Further, the ink composition according to the present invention may optionally include benzoic acid, dichlorophene, hexachlorophene, sorbic acid, p-hydroxybenzoic acid ester, ethylenediaminetetraacetic acid (EDTA), sodium dehydroacetate, 1,2-benzothiazoline-3-one [trade name: Proxel XLII (available from ICI)], 3,4-isothiazoline-3-one, etc. incorporated therein for the purpose of mildewproofing, corrosion prevention, rust prevention, etc. Further, the ink composition according to the present invention may optionally include urea, thiourea and/or ethyleneurea, etc. incorporated therein for the purpose of preventing the nozzle from drying our.

Various properties of the ink composition according to the present invention can be appropriately controlled. In a preferred embodiment of the present invention, the viscosity of the ink composition is preferably not more than 25 mPa•sec., more preferably not more than 10 mPa•sec. (25°C). If the viscosity of the ink composition of the present invention falls within the above defined range, the ink composition can be stably jetted from the ink jet head. Further, the surface tension of the ink composition can be appropriately controlled. In practice, however, it is preferably from 30 to 50 mN/m (25°C).

The ink composition according to the present invention can be prepared, e.g., by simultaneously adding a carbon black, an organic pigment and a dispersant to an aqueous medium, and then dispersing the mixture. The dispersion is not specifically limited. For example, the dispersion may involve a first step of dissolving a dispersant, an alkali neutralizer and a dissolution aid in an aqueous medium (e.g., ion-exchanged water) to prepare a uniform solution (vehicle), a second premixing step of simultaneously adding a carbon black and an organic pigment to the vehicle to cause penetration of the dispersant component, and a third step of atomizing the mixture using a bead mill. Further, in order to accelerate the adsorption of the dispersant on the surface of the pigment, the ink composition may be subjected to a post-treatment such as low shear-rate stirring.

The ink composition according to the present invention can be advantageously used in any ink jet recording process. In particular, where the ink composition according to the present invention is used in the ink jet recording process which comprises jetting droplets of ink composition through the print head onto a heated recording medium to form an ink image thereon, when the ink is attached to the recording medium which has been heated to a temperature of about 80°C to 120°C, it is heated to show a rapid thickening, making it possible to obtain a high quality image.

Further, the carbon black to be incorporated in the ink composition for ink jet recording process has a primary particle diameter of from 10 to 40 nm on the average. In an aqueous medium, these primary particles of carbon black are not individually dispersed. Several or scores of these primary particles are connected in series to form a cluster structure. Thus, these particles are dispersed in the form of secondary particle units having a size of from 100 nm to 200 nm. On the other hand, the organic pigment has a primary particle diameter of from 20 to 100 nm on the average. In an aqueous medium, these organic pigment particles are dispersed alone or in the form of secondary particles having a size of from 40 to 200 nm formed by the agglomeration of several particles at most.

In other words, the carbon black exhibits a structural form due to so strong an interparticle action. These particles are attracted to each other. Thus, the carbon black is stably dispersed in the form of structure having a size of from 5 to 10 times that of the primary particle. On the contrary, it was found that because of its weak mutual interaction the organic pigment particles are stable alone or in the form of structure having a size of several times that of the primary particle.

Referring to the ink composition for ink jet recording process comprising the carbon black or organic pigment alone, respectively, the ink composition comprising the organic pigment but free of carbon black can be stably jetted from the recording head in a stable manner over an extended period of time without flying in deflected directions, making it possible to obtain good print quality. However, the ink composition containing the carbon black but no organic pigment can initially print without flying in deflected directions but such flies in deflected directions more occasionally with the passage of time if it is jetted over an extended period of time, eventually giving deteriorated prints after scores of minutes to several hours. A similar phenomenon is observed with another combination of carbon black and organic pigment having the same primary particle diameter as mentioned above. Accordingly, it is thought that the difference in physical or chemical action between primary particles causes the foregoing phenomenon.

The inventors added an organic pigment to a carbon black, and then stirred the mixture to effect dispersion. As a result, a surprising fact was found that the incorporation of an organic pigment makes it possible to prevent the ink composition comprising a carbon black alone from flying in deflected directions and to provide the ink composition with almost the same long-term jetting stability as the ink composition comprising an organic pigment alone. Further, the incorporation of an organic pigment in a carbon black makes it possible to provide the printed material with an excellent light resistance and to give a satisfactory print quality. In other words, the combination of carbon black with an organic pigment makes it possible to maintain the excellent light resistance inherent to a pigment while securing long-term jetting stability (elimination of malalignment). Further, the reddish tinge inherent to carbon black can be easily eliminated by properly selecting the mixing proportion of organic pigment.

Further, the condition of nozzle orifice in the ink head was observed under a microscope. As a result, it was found that a thin film is uniformly formed on the entire circumference in the vicinity of the nozzle hole when the ink composition comprising an organic pigment but no carbon black is used while the carbon black is attached only to a portion around the nozzle hole when the ink composition comprising a carbon black but no organic pigment is used. This is probably because when the ink is jetted from the nozzle orifice, the ink is subjected to a high shear rate which causes the carbon black particles to be attracted to each other due to their mutual interaction, causing the ink to scatter. Accordingly, when the ink composition comprising a carbon black but no organic pigment is used, the ink composition which is jetted is acted on by the carbon black attached to a portion around the ink nozzle orifice to fly in deflected directions. On the contrary, when the ink composition comprising an organic pigment but no carbon black is used, the circumference of the nozzle orifice is uniformly wet to form a thin film thereon, making it possible to prevent the jetting direction from being deflected. It is thought that also when the ink composition of the present invention is used, a thin film is uniformly formed on the total circumference around the nozzle orifice, making it possible to prevent the jetting direction from being deflected, as in the case of the ink composition comprising an organic pigment but free of carbon black.

### EXAMPLES

The present invention will be further described in the following examples. However, these examples should not be interpreted as limiting the scope of the present invention. Unless otherwise indicated herein, all parts, percents, ratios and the like are by weight.

### EXAMPLE 1

The ink composition for ink jet recording process according to the present invention was prepared in accordance with the following procedure:

### (1) Preparation of Various Pigment Dispersions

### (a) Carbon Black Dispersion

4 parts by weight of a styrene-acrylic acid copolymer resin (Joncryl 550; weight-average molecular weight: 7,500; acid value: 200), 2.7 parts by weight of triethanolamine, and 0.4 part by weight of isopropyl alcohol were thoroughly dissolved in 72.9 parts by weight of ion-exchanged water under heating at 70°C.

To the solution thus obtained were then added 20 parts by weight of Carbon Black MA-100 (available from Mitsubishi Kasei Corp.). The mixture was premixed, and then subjected to dispersion using an Eiger mill (available from Eiger Japan K.K.) until the average particle diameter (secondary particle diameter) of the carbon black reached 100 nm (bead packing: 70%; media diameter: 0.7 mm) to obtain the desired carbon black dispersion (hereinafter referred to as "CB Dispersion").

### (b) Dispersion of Organic Cyan Pigment

4 parts by weight of a styrene-acrylic acid copolymer resin (Joncryl 550; weight-average molecular weight: 7,500; acid value: 200), 2.7 parts by weight of triethanolamine, and 0.4 part by weight of isopropyl alcohol were thoroughly dissolved in 72.9 parts by weight of ion-exchanged water under heating at 70°C.

To the solution thus obtained were then added 20 parts by weight of C.I. pigment blue 15 : 3. The mixture was premixed, and then subjected to dispersion using an Eiger mill (available from Eiger Japan K.K.) until the average particle diameter of the pigment reached 110 nm (bead packing: 70%; media diameter: 0.7 mm) to obtain the desired dispersion of organic cyan pigment (hereinafter referred to as "C Dispersion").

### (c) Dispersion of Organic Magenta Pigment

5 parts by weight of a styrene-acrylic acid copolymer resin (Joncryl 550; weight-average molecular weight: 7,500; acid value: 200), 3.4 parts by weight of triethanolamine, and 0.4 part by weight of isopropyl alcohol were thoroughly dissolved in 71.2 parts by weight of ion-exchanged water under heating at 70°C.

To the solution thus obtained were then added 20 parts by weight of C.I. pigment red 7. The mixture was premixed, and then subjected to dispersion by means of an Eiger mill (available from Eiger Japan K.K.) until the average particle diameter of the pigment reached 120 nm (bead packing: 70%; media diameter: 0.7 mm) to obtain the desired dispersion of organic magenta pigment (hereinafter referred to as "M Dispersion").

### (d) Dispersion of Organic Yellow Pigment

6 parts by weight of a styrene-acrylic acid copolymer resin (Joncryl 550; weight-average molecular weight: 7,500; acid value: 200), 4.1 parts by weight of triethanolamine, and 0.4 part by weight of isopropyl alcohol were thoroughly dissolved in 69.5 parts by weight of ion-exchanged water under heating at 70°C.

To the solution thus obtained were then added 20 parts by weight of C.I. pigment yellow 3. The mixture was premixed, and then subjected to dispersion by means of an Eiger mill (available from Eiger Japan K.K.) until the average particle diameter of the pigment reached 115 nm (bead packing: 70%; media diameter: 0.7 mm) to obtain the desired dispersion of organic yellow pigment (hereinafter referred to as "Y Dispersion").

### (2) Preparation of Ink Composition

The foregoing various dispersions were then used to prepare an ink composition of the present invention.

| | |
|---|---|
| CB Dispersion | 12.75 parts by weight |
| C Dispersion | 0.75 part by weight |
| M Dispersion | 0.75 part by weight |
| Y Dispersion | 0.75 part by weight |
| Styrene Acryl Ester | |
| emulsion | 10 parts by weight (in solid content equivalence) |
| Diethylene Glycol | 12 parts by weight |
| Maltitol | 8.0 parts by weight (in solid content equivalence) |
| Anionic Surface Active Agent | 0.5 part by weight |
| Disodium Hydrogen Phosphate | 0.1 part by weight |
| Ion-Exchanged Water | 37.4 parts by weight |

The styrene acryl ester emulsion was an aqueous dispersion having a concentration of 40.0% in solid content equivalence. The maltitol was an aqueous solution having a concentration of 80% in solid content equivalence. Therefore, the values given above are as calculated in terms of solids content. An ammonium salt of polyoxyethylenealkylphenylethersulfuric acid [Hitenol No. 7, available from Dai-ichi Kogyo Seiyaku Co., Ltd.] was used as the anionic surface active agent. The lowest temperature at which the styrene acryl ester emulsion used can produce a styrene acryl ester film (MFT) was 85°C.

The foregoing components were mixed to prepare an ink composition. The ink composition thus obtained was then passed through a metal mesh filter (twill weave; 2,300 mesh, available from Manabe Kogyo Co., Ltd.) to obtain an ink composition of the present invention.

### EXAMPLES 2 TO 5

The procedure of Example 1 was followed except that the formulation ingredients set forth in Table 1 below were used in the amounts set forth in Table 1, respectively. Thus, the ink compositions of Examples 2 to 5 were obtained.

### EXAMPLES 6 AND 7

### (1) Preparation of Pigment Dispersion

### (a) Dispersion of Organic Black Pigment

The procedure for the preparation of the dispersion of organic cyan pigment described in Example 1 (b) was followed except that C.I. pigment black 1 (aniline black) was used as the organic pigment. Thus, a dispersion of an organic black pigment was obtained.

### (b) Dispersion of Organic Brown Pigment

The procedure for the preparation of the dispersion of organic brown pigment described in Example 1 (c) was followed except that C.I. pigment brown 26 was used as the organic pigment. Thus, a dispersion of organic brown pigment was obtained.

### (2) Preparation of Ink Composition

The procedure of Example 1 was followed except that the formulation ingredients set forth in Table 1 below were used in the amounts set forth in Table 1, respectively. Thus, the ink compositions of Examples 6 and 7 were obtained.

### EXAMPLE 8

### (1) Dispersion of Mixed Pigment

5 parts by weight of a styrene-acrylic acid copolymer resin (Joncryl 550; weight-average molecular weight: 7,500; acid value: 200), 3.4 parts by weight of triethanolamine, and 0.4 part by weight of isopropyl alcohol were thoroughly dissolved in 71.2 parts by weight of ion-exchanged water under heating at 70°C.

To the solution thus obtained were then added simultaneously 10 parts by weight of Carbon Black MA-100 (available from Mitsubishi Kasei Corp.), 3 parts by weight of C.I. pigment blue 15 : 3 (phthalocyanine blue G), 4 parts by weight of C.I. pigment red 7, and 3 parts by weight of C.I. pigment yellow 3. The mixture was premixed, and then subjected to dispersion by means of an Eiger mill (available from Eiger Japan K.K.) until the average particle diameter of the pigment reached a range of from 100 to 130 nm (bead packing: 70%; media diameter: 0.7 mm) to obtain the desired mixed pigment dispersion.

### (2) Preparation of Ink Composition

The procedure of Example 1 was followed except that the formulation set forth in Table 1 below was used in the amounts set forth in Table 1. Thus, the ink composition of Example 8 was obtained.

### COMPARATIVE EXAMPLE 1

The procedure of Example 1 was followed except that the formulation set forth in Table 1 below was used in the amounts set forth in Table 1. Thus, the ink composition of Comparative Example 1 was obtained. The ink composition of Comparative Example 1 was the same as the ink composition of Example 1 except that the pigment comprised carbon black alone.

### COMPARATIVE EXAMPLE 2

The procedure of Example 1 was followed except that the formulation set forth in Table 1 below was used in the amounts set forth in Table 1. Thus, the ink composition of Comparative Example 2 was obtained. The ink composition of Comparative Example 2 was the same as the ink composition of Example 3 except that the organic pigment was replaced by a commercially available dye, C.I. direct black 19.

The formulation of the ink compositions of Examples 1 to 8 and Comparative Examples 1 and 2 are set forth in Table 1. The value in Table 1 indicates amount in % by weight.

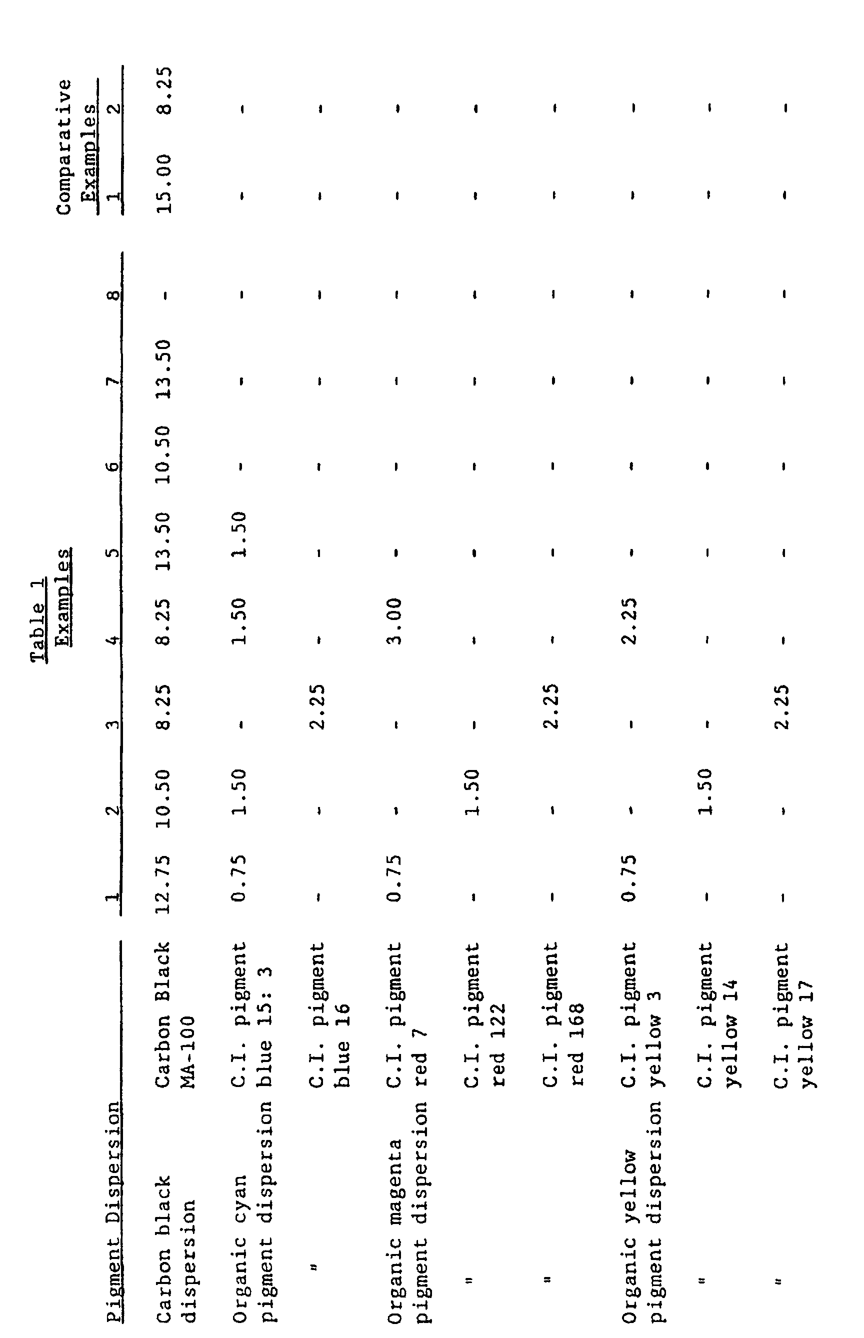

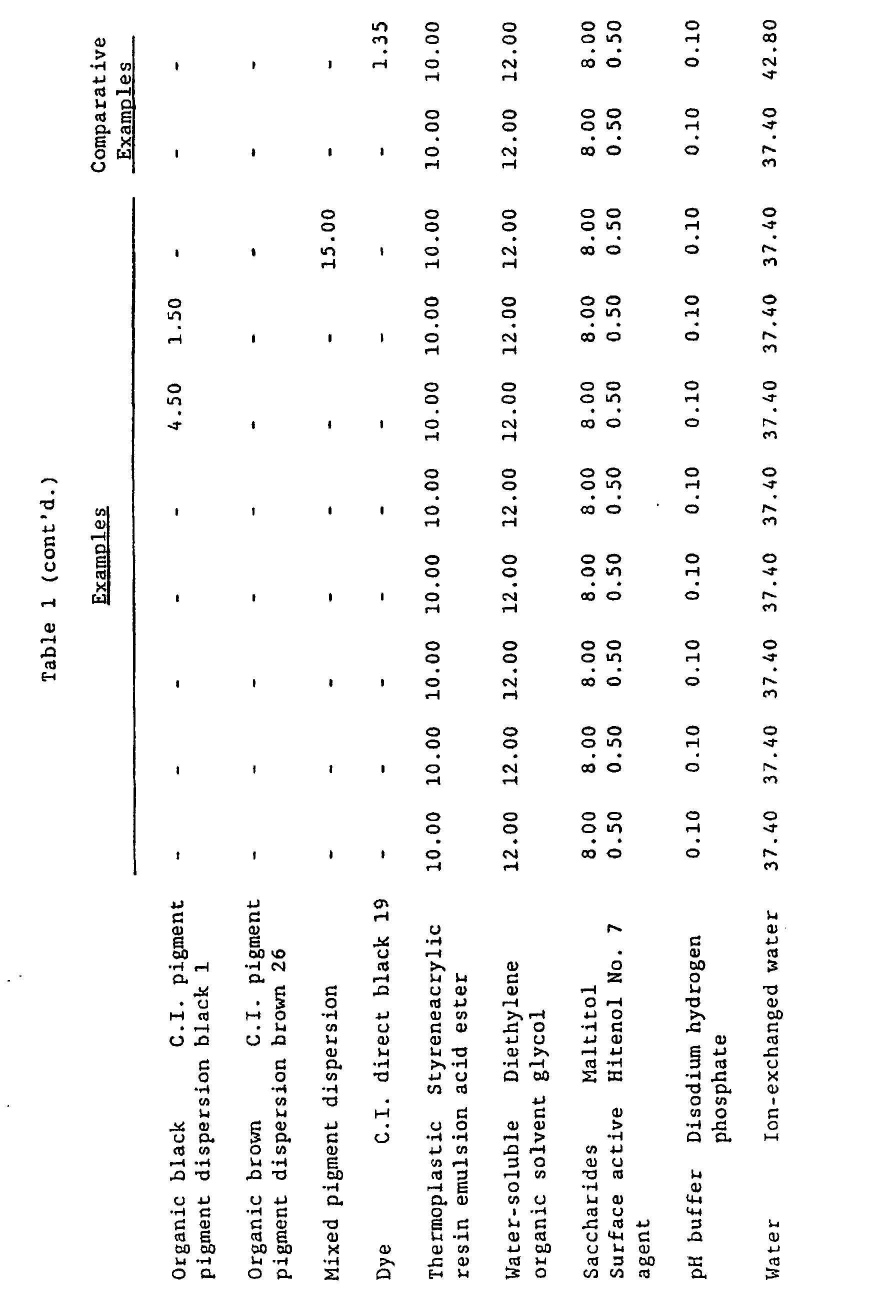

### Evaluation of Properties

The ink jet recording process using the ink compositions prepared in Examples 1 to 8 and Comparative Examples 1 and 2 and various properties of the resulting printed material were evaluated for various properties.

### (1) Evaluation of Jetting Stability

The ink composition was packed into a recording head of the type employing a piezoelectric element. The ink composition was then jetted from the nozzle to print on a recording medium (Xerox-4024). The conditions at the beginning of printing and after 2 hours were compared. The results were evaluated in accordance with the following 3-step grading:
A: Even after two hours of continuous printing, the ink composition flew as in the initial stage without being deflected;
B: After two hours of continuous printing, the ink composition flew in somewhat deflected directions. The print quality was acceptable, though inferior to that at the initial stage. No white bandings occurred in the solid area.
C: After two hours of continuous printing, the ink composition flew in drastically deflected directions. White banding occurred in the solid area.

### (2) Light Resistance

The printed matter prepared from the ink composition was exposed in a xenon fadeometer for 200 hours. The change in chromaticity from and after the exposure was then determined. For the measurement of chromaticity, the distance (color difference; ΔE) on the chromaticity coordinates by CIEL*a*b* color specification method was measured before and after the exposure. The results were then evaluated in accordance with the following 3-step grading:
A: ΔE ≤ 3; Little or no fading observed;
B: 3 < ΔE < ≤ 6; Some but acceptable fading observed;
C: ΔE > 6; Significant fading observed

### (3) Water Resistance

The printed matter prepared from the ink composition was rubbed with a commercially available fluorescent aqueous ink containing pen (Fluorescent Pen 2, available from ZEBRA Co., Ltd.) on the printed image under a load of 300 g. The results were evaluated in accordance with the following 3-step grading:
A: No bleeding, no tailing (or drawing) occurred;
B: No bleeding, but some tailing occurred;
C: Bleeding and tailing occurred

The results of the evaluation of Examples 1 to 7 and Comparative Examples 1 and 2 produced according to the foregoing methods are set forth in Table 2.

In the recording process, using a recording apparatus having a platen equipped with a heating means, droplets of the ink composition were jetted onto a heated recording medium.

**Table 2**

| Example No. | Jetting Stability | Light Resistance | | Water Resistance |
|---|---|---|---|---|
| Example 1 | A | 1.2 | A | A |
| Example 2 | A | 1.4 | A | A |
| Example 3 | A | 1.6 | A | A |
| Example 4 | A | 1.6 | A | A |
| Example 5 | A | 1.1 | A | A |
| Example 6 | A | 1.6 | A | A |
| Example 7 | A | 1.0 | A | A |
| Example 8 | A | 2.5 | A | A |
| Comparative Example 1 | C | 0.9 | A | A |
| Comparative Example 2 | B | 8.5 | C | C |

Thus, the ink composition according to the present invention comprises a carbon black and an organic pigment incorporated therein in combination and thus can provide an excellent print quality with a good light resistance without causing malalignment from the ink head even after a prolonged ink jet printing.

While the invention has been described in detail and with reference to specific embodiments thereof, it will be apparent to one skilled in the art that various changes and modifications can be made therein without departing from the scope thereof.

## Claims

1. An ink composition for ink jet recording, comprising
(1) a carbon black,
(2) an organic pigment and
(3) a dispersant
incorporated in an aqueous medium.

2. The ink composition according to Claim 1, comprising at least one organic pigment selected from the group consisting of C.I. pigment yellow, C.I. pigment red and C.I. pigment blue.

3. The ink composition according to Claim 2, comprising C.I. pigment yellow, C.I. pigment red and C.I. pigment blue.

4. The ink composition according to any one of Claims 1 to 3, further comprising a thermoplastic resin emulsion.

5. A process for the preparation of an ink composition for ink jet recording, which comprises simultaneously adding
(1) a carbon black,
(2) an organic pigment and
(3) a dispersant
to an aqueous medium, and then subjecting the mixture to dispersion.

6. An ink jet recording process, which comprises jetting an ink composition according to any one of Claims 1 to 4 as an ink droplet onto a recording medium.

7. The recording process according to Claim 6, which comprises jetting an ink composition onto a heated recording medium as an ink droplet.

## Patentansprüche

1. Tintenzusammensetzung zum Tintenstrahlaufzeichnen, umfassend
(1) einen Ruß,
(2) ein organisches Pigment, und
(3) ein Dispergiermittel
eingebracht in ein wässriges Medium.

2. Tintenzusammensetzung nach Anspruch 1, umfassend mindestens ein organisches Pigment ausgewählt aus C. I. Pigment gelb, C. I. Pigment rot und C. I. Pigment blau.

3. Tintenzusammensetzung nach Anspruch 2, umfassend C. I. Pigment gelb, C. I. Pigment rot und C. I. Pigment blau.

4. Tintenzusammensetzung nach einem der Ansprüche 1 bis 3, weiterhin umfassend eine Emulsion eines thermoplastischen Harzes.

5. Verfahren zur Herstellung einer Tintenzusammensetzung zum Tintenstrahlaufzeichnen, welches gleichzeitiges Zufügen
(1) eines Rußes,
(2) eines organischen Pigments, und
(3) eines Dispergiermittels
zu einem wässrigen Medium und anschließendes Dispergieren des Gemisches umfasst.

6. Tintenstrahlaufzeichnungsverfahren, welches das Aufstrahlen einer Tintenzusammensetzung nach einem der Ansprüche 1 bis 4 in Form eines Tintentröpfchens auf ein Aufzeichnungsmedium umfasst.

7. Aufzeichnungsverfahren nach Anspruch 6, welches das Aufstrahlen einer Tintenzusammensetzung in Form eines Tintentröpfchens auf ein erwärmtes Aufzeichnungsmedium umfasst.

## Revendications

1. Composition d'encre pour l'impression à jet d'encre, comprenant
(1) un noir de carbone,
(2) un pigment organique et
(3) un dispersant
incorporés dans un milieu aqueux.

2. Composition d'encre selon la revendication 1, comprenant au moins un pigment organique sélectionné dans le groupe constitué par le pigment C.I. jaune, le pigment C.I. rouge et le pigment C.I. bleu.

3. Composition d'encre selon la revendication 2, comprenant le pigment C.I. jaune, le pigment C.I. rouge et le pigment C.I. bleu.

4. Composition d'encre selon l'une quelconque des revendications 1 à 3, comprenant en plus une émulsion de résine thermoplastique.

5. Procédé de préparation d'une composition d'encre pour l'impression à jet d'encre, qui comprend d'ajouter simultanément
(1) un noir de carbone,
(2) un pigment organique et
(3) un dispersant
à un milieu aqueux et de soumettre ensuite le mélange à une dispersion.

6. Procédé d'impression à jet d'encre, qui comprend de projeter sur un support d'impression une composition d'encre selon l'une quelconque des revendications 1 à 4 sous la forme d'une gouttelette d'encre.

7. Procédé d'impression selon la revendication 6, qui comprend de projeter sur un support d'impression chauffé une composition d'encre sous la forme d'une gouttelette d'encre.
